# EUROPEAN PATENT APPLICATION

(11) **EP 2 026 193 A2**
(43) Date of publication of application: **18.02.2009**
(21) Application number: 08252396.0
(22) Date of filing: 14.07.2008
(51) Int. Cl.: G06F 3/12

(54) **Print server, preview data generating method, and storage medium**

(30) Priority: 31.07.2007 JP 2007199914
(71) Applicant: Ricoh Company, Ltd., Tokyo 143-8555 (JP)
(72) Inventor: Asai, Takahiro, Naka-gun Kanagawa (JP)
(74) Representative: Mounteney, Simon James

(57) **Abstract**

A disclosed print server includes a preview request receiving unit configured to receive a preview request; a preview request analysis unit configured to analyze the received preview request and thereby to extract request information from the preview request; a print data obtaining unit configured to obtain print data specified in the request information extracted from the preview request; and a preview data generating unit configured to generate preview data from the obtained print data according to a print option specified in the request information extracted from the preview request.

## Description

### BACKGROUND OF THE INVENTION

### 1. Field of the Invention

The present invention generally relates to a print server in a printing system, a preview data generating method in the print server, and a storage medium storing program code for causing a computer to function as the print server.

### 2. Description of the Related Art

A preview function allows the user to see how pages will appear before they are printed, and an image or data generated by a preview function is called a "preview image" or "preview data". A preview image is normally generated on a computer requesting printing by a preview function provided as a part of an operating system (OS). For example, Microsoft Windows (registered trademark), which is a widely used operating system, includes a preview function and allows the user to preview a document regardless of the application program used. Other operating systems also provide similar preview functions.

Patent document 1 discloses a remote printing system (or service) that enables the user to print a document (or print data) using a printing apparatus in an outside office (such as a branch office the user is visiting).

In the disclosed remote printing system, print data (such as a document file or Web contents) are obtained and printed by a remote computer (server) and therefore it is not possible to preview the print data using a preview function of an operating system in a client computer requesting the printing.

Therefore, to preview a document when using such a remote printing system, it is necessary to generate a preview image on the remote computer. For this purpose, for example, a thumbnail generating service (e.g., "Thumbnail Images" of Alexa Internet, Inc., http://www.alexa.com/) may be used.
[Patent document 1] Japanese Patent Application Publication No. 2001-103233

However, such a thumbnail generating service is basically designed to generate thumbnail images used to select Web pages to be browsed and is not optimized to generate a preview image for confirming the appearance of a document before printing.

For example, such a thumbnail generating service generates only the first page (or the front page) of print data and is not able to reflect special print options such as N-up printing in a preview image.

### SUMMARY OF THE INVENTION

Embodiments of the present invention provide a print server, a preview data generating method in the print server, and a storage medium storing program code for causing a computer to function as the print server that solve or reduce one or more problems caused by the limitations and disadvantages of the related art.

An embodiment of the present invention provides a print server that includes a preview request receiving unit configured to receive a preview request; a preview request analysis unit configured to analyze the received preview request and thereby to extract request information from the preview request; a print data obtaining unit configured to obtain print data specified in the request information extracted from the preview request; and a preview data generating unit configured to generate preview data from the obtained print data according to a print option specified in the request information extracted from the preview request.

Another embodiment of the present invention provides a method of generating preview data in a print server. The method includes the steps of a) receiving a preview request; b) analyzing the received preview request and thereby extracting request information from the preview request; c) obtaining print data specified in the request information extracted from the preview request; and d) generating the preview data from the obtained print data according to a print option specified in the request information extracted from the preview request.

Still another embodiment of the present invention provides a storage medium having program code stored therein for causing a computer to function as a print server. The print server includes a preview request receiving unit configured to receive a preview request; a preview request analysis unit configured to analyze the received preview request and thereby to extract request information from the preview request; a print data obtaining unit configured to obtain print data specified in the request information extracted from the preview request; and a preview data generating unit configured to generate preview data from the obtained print data according to a print option specified in the request information extracted from the preview request.

### BRIEF DESCRIPTION OF THE DRAWINGS

FIG. 1 is a drawing illustrating a configuration of an exemplary printing system according to an embodiment of the present invention;
FIG. 2 is a flowchart showing a first exemplary preview data generating process; and
FIG. 3 is a flowchart showing a second exemplary preview data generating process.

### DESCRIPTION OF THE PREFERRED EMBODIMENTS

Preferred embodiments of the present invention are described below with reference to the accompanying drawings.

### <SYSTEM CONFIGURATION>

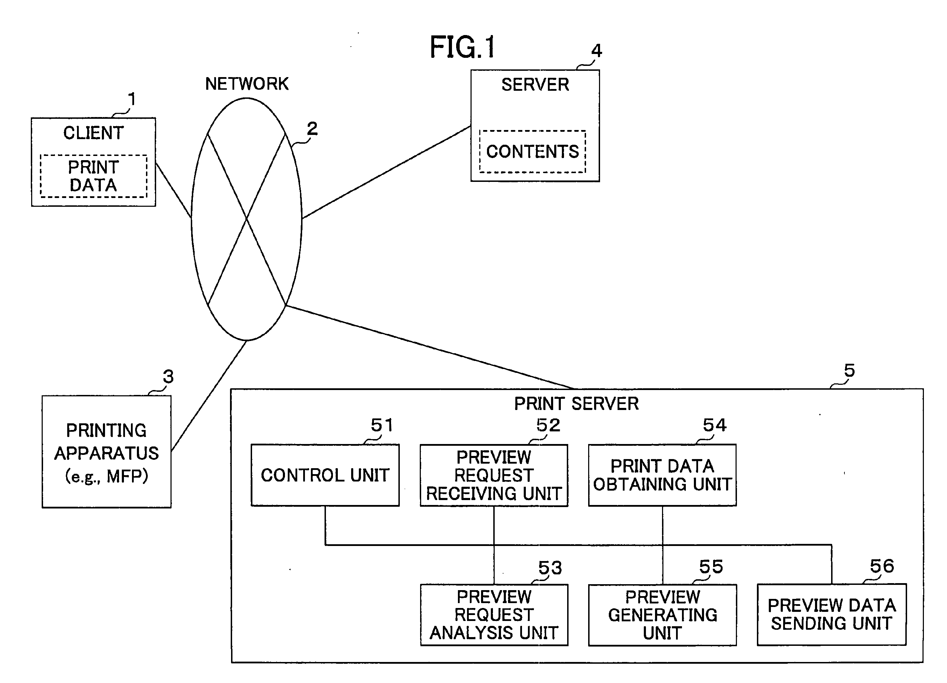

FIG. 1 is a drawing illustrating a configuration of an exemplary printing system according to an embodiment of the present invention.

In the exemplary printing system shown in FIG. 1, a client 1, a printing apparatus 3, a server 4, and a print server 5 are connected to each other via a network 2.

The client 1 is a user terminal such as a personal computer (PC), a personal digital assistant (PDA), or a mobile phone. The client 1 may contain print data (e.g., a document file created by an application).

The network 2 is a communication line such as the Internet. Alternatively, the network 2 may be a local area network (LAN) or a wide area network (WAN).

The printing apparatus 3 is an image forming apparatus such as a multifunction printer (MFP) that prints an image, for example, on paper.

The server 4 stores contents that may be printed.

The print server 5 according to an embodiment of the present invention includes a control unit 51, a preview request receiving unit 52, a preview request analysis unit 53, a print data obtaining unit 54, a preview data generating unit 55, and a preview data sending unit 56. These functional units are implemented by program code executed on the hardware of the print server 5 including a central processing unit (CPU), a read-only memory (ROM), and a random access memory (RAM).

The control unit 51 controls other components of the print server 5.

The preview request receiving unit 52 receives a preview request, for example, via the hypertext transfer protocol (HTTP) from the client 1 or the printing apparatus 3.

The preview request analysis unit 53 analyzes the preview request and thereby extracts request information including, for example, a print data location, a printer type, and a print option(s) from the preview request.

The print data obtaining unit 54 obtains print data (e.g., a document file or Web contents) based on the print data location extracted by the preview request analysis unit 53.

The preview data generating unit 55 generates preview data for print preview from the obtained print data.

The preview data sending unit 56 sends the generated preview data to the client 1 or the printing apparatus 3 from which the preview request is sent.

### <FIRST EXEMPLARY PREVIEW DATA GENERATING PROCESS>

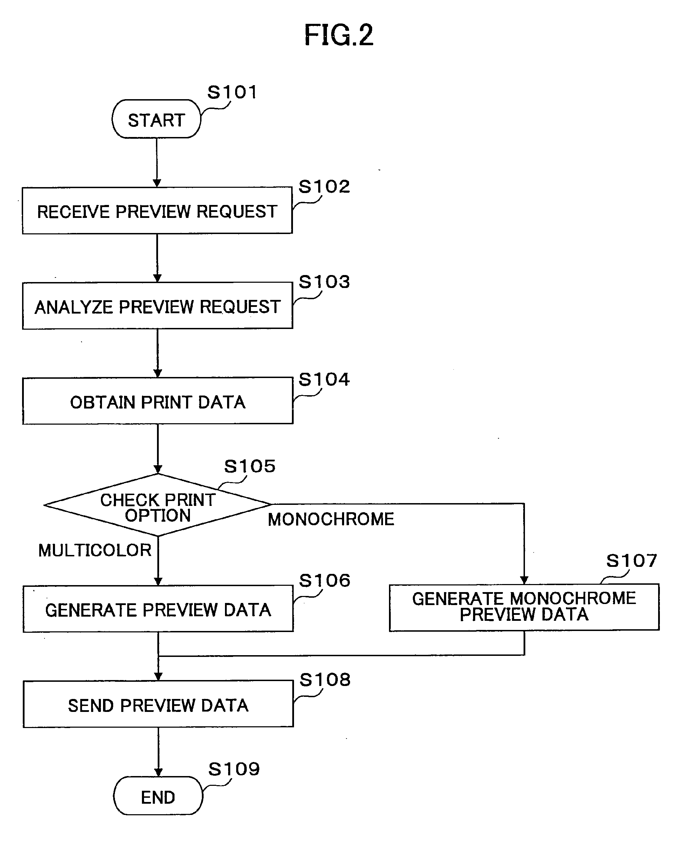

FIG. 2 is a flowchart showing a first exemplary preview data generating process performed by the print server 5.

In FIG. 2, when the process is started (S101), the preview request receiving unit 52 of the print server 5 becomes ready to receive a preview request. The print server 5 is connected via a line or wirelessly to the network 2 and is assigned an IP address. The preview request receiving unit 52 waits for input packets sent to the IP address and having a specific port number, for example, "8080".

When the user sends a preview request to the print server 5 by operating the client 1 or the printing apparatus 3, the preview request receiving unit 52 receives the preview request (S102). The preview request, for example, includes a uniform resource locator (URL) indicating the location of print data on the Internet, a printer type, and a print option (may be collectively called request information). In this exemplary process, it is assumed that the URL is "http://somewhere/page.html", the printer type is "application/x-printer1", and the print option is a color option "color=monochrome" indicating monochrome printing.

After step S102, the preview request analysis unit 53 analyzes the received preview request and thereby extracts the URL "http://somewhere/page.html", the printer type "application/x-printer1", and the color option "color=monochrome" from the preview request (S103).

Next, the print data obtaining unit 54 accesses the extracted URL and obtains print data (S104). In the exemplary steps described above, print data are obtained from a URL extracted from a preview request. Alternatively, print data may be sent to the print server 5 directly from the client 1. Also, the order of steps S104 and S105 described below may be reversed.

In the next step, the process branches to step S106 or S107 according to the color option (or the print option) in the preview request. The preview data generating unit 55 determines whether the color option is "multicolor" or "monochrome" (S105). In this example, since "color=monochrome" is specified as the color option, the preview data generating unit 55 converts the print data into monochrome data (for example, by changing color values in the print data) and thereby generates preview data in monochrome even if the print data are multicolor data (S107). If "multicolor" is specified as the color option or no color option is specified in the preview request, the preview data generating unit 55 generates preview data without changing the colors of the print data (S106). It is also possible to provide the user a wider range of color options. For example, "color=8" indicating 8-bit color may be provided as a color option. If "color=8" is specified, the preview data generating unit 55 converts the print data into 256-color data and thereby generates 256-color preview data.

After step S106 or S107, the preview data sending unit 56 sends the generated preview data to the client 1 or the printing apparatus 3 from which the preview request is sent (S108), and the process is terminated (S109).

Thus, an embodiment of the present invention enables the user to preview print data before printing even in a remote printing environment and thereby makes it possible to reduce misprinting.

### <SECOND EXEMPLARY PREVIEW DATA GENERATING PROCESS>

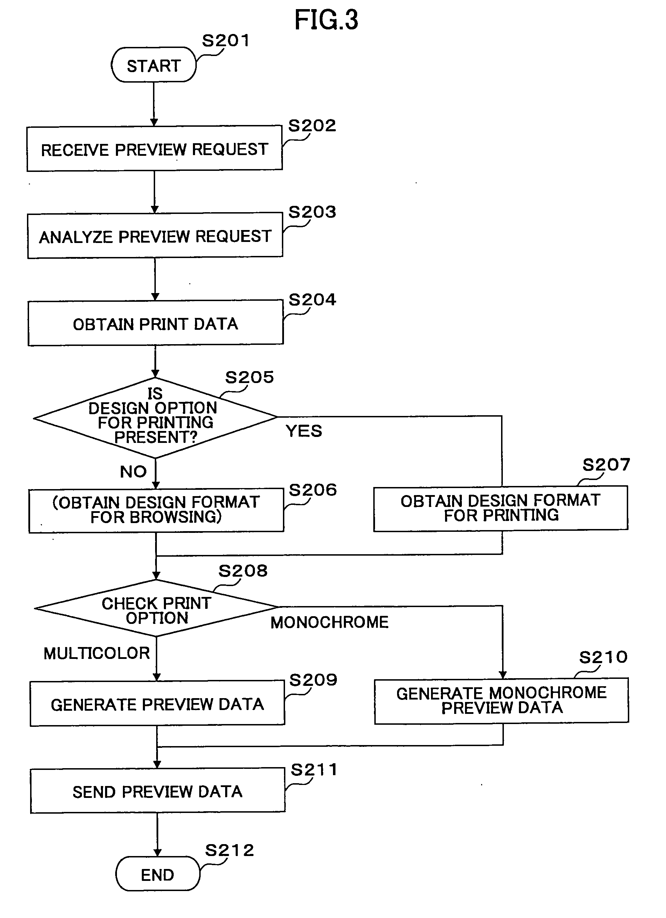

FIG. 3 is a flowchart showing a second exemplary preview data generating process performed by the print server 5.

In FIG. 3, when the process is started (S201), the preview request receiving unit 52 of the print server 5 becomes ready to receive a preview request.

When the user sends a preview request to the print server 5 by operating the client 1 or the printing apparatus 3, the preview request receiving unit 52 receives the preview request (S202). The preview request, for example, includes a URL indicating the location of print data on the Internet, a printer type, and a print option (may be collectively called request information). In this exemplary process, it is assumed that the URL is "http://somewhere/page.html", the printer type is "application/x-printer1", and the print option is a color option "color=monochrome" indicating monochrome printing.

After step S202, the preview request analysis unit 53 analyzes the received preview request and thereby extracts the URL "http://somewhere/page.html", the printer type "application/x-printer1", and the color option "color=monochrome" from the preview request (S203).

Next, the print data obtaining unit 54 accesses the extracted URL and obtains print data (S204). The print data obtaining unit 54 also determines whether a design option for printing is present in the print data (S205). The design (style or presentation) of print data may be defined, for example, by cascading style sheets (CSS). CSS is a style sheet language used to define the design of a document written in a markup language such as the hypertext markup language (HTML) or the extensible hypertext markup language (XHTML). Also, CSS makes it possible to change the design (style or presentation) of a document according to a terminal or a device on which the document is to be displayed or printed. For example, CSS provides design options (called media types) such as 'media="screen"' for browsing on a PC display, 'media="mobile"' for display on a mobile terminal such as a mobile phone, and 'media="print"' for printing. Although CSS is used in this exemplary process, other style sheet languages or design specification methods may also be used.

If the print data contain no design option for printing (if media="print" is not present in the print data) (NO in step S205) but contain other design options including a default design option for browsing with a browser (if media="screen" is present), the print data obtaining unit 54 obtains a design format (e.g., a style sheet) for browsing (S206). Alternatively, the print data obtaining unit 54 may be configured to proceed to step S208 without obtaining a design format if the print data contain no design option for printing.

If the print data contain a design option for printing (YES in step S205), the print data obtaining unit 54 obtains a design format (e.g., a style sheet) for printing (S207).

In the next step, the process branches to step S209 or S210 according to the color option (or the print option) in the preview request. The preview data generating unit 55 determines whether the color option is "multicolor" or "monochrome" (S208). In this example, since "color=monochrome" is specified as the color option, the preview data generating unit 55 converts the print data into monochrome data (for example, by changing color values in the print data) and thereby generates preview data in monochrome even if the print data are multicolor data (S210). In this step, if a design format (or a style sheet) has been obtained in step S206 or S207, the preview data generating unit 55 generates the preview data according to the obtained design format.

If no color option is specified or "multicolor" is specified as the color option in the preview request, the preview data generating unit 55 generates preview data without changing the colors of the print data (S209). Similarly, in this step, if a design format (or a style sheet) has been obtained in step S206 or S207, the preview data generating unit 55 generates the preview data according to the obtained design format. It is also possible to provide the user a wider-range of color options. For example, "color=8" indicating 8-bit color may be provided as a color option. If "color=8" is specified, the preview data generating unit 55 converts the print data into 256-color data and generates 256-color preview data.

After step S209 or S210, the preview data sending unit 56 sends the generated preview data to the client 1 or the printing apparatus 3 from which the preview request is sent (S211), and the process is terminated (S212).

Thus, the above embodiment makes it possible to generate preview data according to a design format (or a style sheet) for printing if available. In other words, the above embodiment enables the user to view a preview image that is closer to the final printout and thereby makes it possible to reduce misprinting.

Embodiments of the present invention provide a print server, a preview data generating method in the print server, and a storage medium storing program code for causing a computer to function as the print server that enable the user to preview a document (or print data) before printing even when printing the document using a remote printing system (or service) and thereby make it possible to reduce misprinting.

Preferred embodiments of the present invention are described above. However, the present invention is not limited to the specifically disclosed embodiments, and variations and modifications may be made without departing from the scope of the present invention.

## Claims

1. A print server, comprising:
a preview request receiving unit configured to receive a preview request;
a preview request analysis unit configured to analyze the received preview request and thereby to extract request information from the preview request;
a print data obtaining unit configured to obtain print data specified in the request information extracted from the preview request; and
a preview data generating unit configured to generate preview data from the obtained print data according to a print option specified in the request information extracted from the preview request.

2. A print server as claimed in claim 1, wherein
the print data obtaining unit is configured to obtain a design format for printing together with the print data if a design option for printing is present in the print data; and
the preview data generating unit is configured to generate the preview data from the print data according to the print option and the obtained design format for printing.

3. A print server as claimed in claim 2, wherein
if the design option for printing is not present but a design option for browsing is present in the print data, the print data obtaining unit is configured to obtain a design format for browsing together with the print data; and
the preview data generating unit is configured to generate the preview data from the print data according to the print option and the obtained design format for browsing.

4. A print server as claimed in any one of claims 1 through 3, wherein the preview data generating unit is configured to convert the print data into monochrome data and thereby to generate the preview data in monochrome if monochrome printing is specified as the print option.

5. A method of generating preview data in a print server, comprising the steps of:
a) receiving a preview request;
b) analyzing the received preview request and thereby extracting request information from the preview request;
c) obtaining print data specified in the request information extracted from the preview request; and
d) generating the preview data from the obtained print data according to a print option specified in the request information extracted from the preview request.

6. A method as claimed in claim 5, wherein
in step c), if a design option for printing is present in the print data, a design format for printing is obtained together with the print data; and
in step d), the preview data are generated from the print data according to the print option and the design format for printing obtained in step c).

7. A method as claimed in claim 6, wherein
in step c), if the design option for printing is not present but a design option for browsing is present in the print data, a design format for browsing is obtained together with the print data; and
in step d), the preview data are generated from the print data according to the print option and the design format for browsing obtained in step c).

8. A method as claimed in any one of claims 5 through 7, wherein, in step d), if monochrome printing is specified as the print option, the print data are converted into monochrome data and the preview data are thereby generated in monochrome.

9. A storage medium having program code embodied therein for causing a computer to function as a print server, the print server comprising:
a preview request receiving unit configured to receive a preview request;
a preview request analysis unit configured to analyze the received preview request and thereby to extract request information from the preview request;
a print data obtaining unit configured to obtain print data specified in the request information extracted from the preview request; and
a preview data generating unit configured to generate preview data from the obtained print data according to a print option specified in the request information extracted from the preview request.
